Europäisches Patentamt

European Patent Office

Office européen des brevets

(19)

(11) Veröffentlichungsnummer: **0 365 765**

**A1**

# EUROPÄISCHE PATENTANMELDUNG

(12)

(21) Anmeldenummer: 89114235.8

(51) Int. Cl.⁵: **B60R 19/26**

(22) Anmeldetag: 02.08.89

(30) Priorität: 23.08.88 DE 3828509

(43) Veröffentlichungstag der Anmeldung:
02.05.90 Patentblatt 90/18

(84) Benannte Vertragsstaaten:
ES FR GB

(71) Anmelder: REHAU AG + Co
Rheniumhaus
D-8673 Rehau(DE)

(72) Erfinder: Der Erfinder hat auf seine Nennung
verzichtet

(54) Stossfänger für Kraftfahrzeuge.

(57) Die Erfindung betrifft einen Stoßfänger für Kraftfahrzeuge mit die Aufprallenergie absorbierenden, zwischen dem Stoßfänger und tragenden Teilen des Kraftfahrzeuges angeordneten Prallelementen (1) aus polymeren Werkstoffen. Diese Prallelemente (1) weisen neben den Stirnflächenbegrenzungen (13, 15) seitliche, einen Hohlraum einschließende Verbindungswände auf. Von den Stirnflächenbegrenzungen ragen in den Hohlraum der einzelnen Prallelemente zueinandergerichtete Verschiebebegrenzungen auf. Die Erfindung wird darin gesehen, daß das Prallelement (1) aus wenigstens zwei, einen inneren (11) und einen äußeren (12) Hohlraum begrenzenden ersten Elementteilen (2, 3) besteht. Diese ersten Elementteile (2, 3) schließen zwischen sich einen inneren, als Doppelhohlraum ausgebildeten zweiten Elementteil (4) ein. Die Begrenzungswände (21, 22, 31, 32) der äußeren Hohlräume (12) der ersten Elementteile (2, 3) sind konkav und die Begrenzungswände (23, 24) der inneren Hohlräume (11) der ersten Elementteile konvex ausgebildet. Die innenliegenden Begrenzungswände der äußeren Hohlräume (22, 32) der ersten Elementteile (2, 3) bilden gleichzeitig die Begrenzungswände (22, 32) des äußeren Hohlraums (42) des zweiten Elementteiles (4).

Fig 1

## STOSSFÄNGER FÜR KRAFTFAHRZEUGE

Die Erfindung betrifft einen Stoßfänger für Kraftfahrzeuge mit die Aufprallenergie absorbierenden, zwischen dem Stoßfänger und tragenden Teilen des Kraftfahrzeuges angeordneten Prallelementen aus polymeren Werkstoffen, wobei die Prallelemente neben den Stirnflächenbegrenzungen seitliche, einen Hohlraum einschließende Verbindungswände aufweisen und wobei von den Stirnflächenbegrenzungen in den Hohlraum der einzelnen Prallelemente zueinander gerichtete Verschiebebegrenzungen aufragen.

Aus dem DE-GM 86 14 694 ist ein Stoßfänger für Kraftfahrzeuge mit die Aufprallenergie absorbierenden Prallelementen bekannt, wobei diese Prallelemente zwischen dem Stoßfänger und tragenden Teilen des Kraftfahrzeuges angeordnet sind. Die bekannten Prallelemente bestehen aus einem Pralltopf mit zwei im Abstand voneinander gehaltenen Begrenzungsplatten, deren Zwischenraum im wesentlichen von den länglichen Prallelementen überbrückt ist. Diese Prallelemente bestehen im einzelnen aus zwei zusammenwirkenden, mit Innenwandbereichen der Begrenzungsplatten einstückig verbundenen und zwischen sich einen Hohlraum einschließenden Verbindungswänden. Zwischen diesen Verbindungswänden der Prallelemente ragen von den Begrenzungsplatten zueinander gerichtete Verschiebebegrenzungen in den Hohlraum der Prallelement selbst oder zwischen zwei nebeneinander angeordneten Prallelementen auf.

Die Verbindungswände der bekannten Prallelemente können zueinander konvex oder konkav ausgerichtet sein.

Mit den bekannten Prallelementen läßt sich ein bestimmter Anteil der Prallenergie beim Aufprallen eines bewegten Elementes, z.B. eines Kraftfahrzeuges, auf einen ruhenden oder mit geringer Geschwindigkeit fortbewegten Körper verzehren.

Nach den heutigen Vorstellungen ist dieser absorbierte Energieanteil jedoch zu gering, um den Anforderungen der Industrie gerecht zu werden.. Hier setzt die Erfindung ein, die es sich zur Aufgabe gestellt hat, ein Prallelement anzugeben, welches optimale Eigenschaften bei der Absorption von Aufprallenergie aufweist und gleichzeitig den Vorteil besitzt, sich nach dem Ende der Energieeinwirkung in die Ausgangsstellung zurückzubewegen. Erfindungsgemäß wird hierzu vorgeschlagen, daß das Prallelement aus wenigstens zwei, einen inneren und einen äußeren Hohlraum begrenzenden ersten Elementteilen besteht, welche zwischen sich einen inneren, als Doppelhohlraum ausgebildeten zweiten Elementteil einschließen, daß die Begrenzungswände der äußeren Hohlräume der ersten Elementteile konkav und die Begrenzungswände

der inneren Hohlräume der ersten Elementteile konvex ausgebildet sind, und daß die innenliegenden Begrenzungswände der äußeren Hohlräume der ersten Elementteile gleichzeitig die Begrenzungswände des äußeren Hohlraums des zweiten Elementteiles bilden.

Tragendes Merkmal der erfindungsgemäßen Prallelemente sind die jeweils in definiertem Abstand voneinander angeordneten Doppelstege, welche die inneren und äußeren Hohlräume begrenzen. Diese Doppelstege gelangen bei der Einwirkung von Aufprallenergie, bei der die Stirnflächenbegrenzungen des Prallelementes aufeinanderzu bewegt werden, infolge ihrer wechselseitig konkav bzw. konvex ausgebildeten Wandgestaltung zu einer teilweise flächenbündigen Anlage aneinander. Dadurch wird eine Gegenkraft gegen die auf das Prallelement einwirkende Aufprallenergie entwickelt, die durch das verwendete Polymermaterial dazuhin positiv beeinflußt werden kann. So sind mit dem erfindungsgemäßen Prallelement bei einer Herstellung aus Polyethylen hoher Dichte Dämpfungskräfte von 12 KN gemessen worden.

Das Prallelement hatte sich nach Beendigung der Krafteinwirkung unmittelbar wieder in seine ursprüngliche Ausgangslage zurückgebildet. Eine Zerstörung des Prallelementes oder von Teilen davon war nicht zu beobachten.

Die gleichen Folgen zeigten sich bei einem Prallelement aus Polycarbonat, hier lagen jedoch die verzehrten Aufprallenergien bei mehr als 30 KN.

Die Verzehrung der Aufprallenergie bei der Benutzung des erfindungsgemäßen Prallelementes kann durch die konstruktive Auslegung der einzelnen Wandbereiche, z.B. die Anbindung der konkaven an die konvexen Wandbereiche, den Abstand der Wandbereiche untereinander und die Dicke der einzelnen Wandbereiche dazu positiv beeinflußt werden. Bei entsprechender Materialauswahl und konstruktiver Gestaltung des erfindungsgemäßen Prallelementes lassen sich hier Aufprallenergien bis zu 90 KN absorbieren, wobei nach Wegnahme der Aufprallenergie das Prallelement sich federnd in seine Ausgangslange zurückbildet. Dieser erhebliche Fortschritt gegenüber bekannten Prallelementen wird durch das Zusammenwirken der konkav bzw. konvex zueinander stehenden Wandbereiche und andererseits durch die Materialauswahl sowie die konstruktive Gestaltung geschaffen.

Es hat sich hierbei besonders vorteilhaft herausgestellt, daß die Begrenzungswände der äußeren und der inneren Hohlräume der ersten Elementteile in definiertem Abstand voneinander angeordnet sind. Durch diese Abstandsanordnung kann der Weg der Begrenzungswände aufeinanderzu bis zur Anlage aneinander bei entsprechender Aufprallenergieeinwirkung definiert festgelegt werden. Dieser definierte Abstand der Begrenzungswände ergibt gleichzeitig die Begrenzung des Verschiebeweges, mit dem die Stirnflächenbegrenzungen des Prallelementes bei der Einwirkung von Prallenergie aufeinanderzu bewegt werden können.

Hier läßt sich eine zusätzliche Federwirkung der Begrenzungswände beobachten, die nach der Berührung auf dem Verschiebewege der Stirnflächenbegrenzungen des Prallelementes fortwirkt und in diesem Zustand aufgrund der Anlage der Begrenzungswege aneinander der einwirkenden Aufprallenergie eine besonders hohe Gegenkraft entgegensetzt. Diese Erhöhung der Gegenkraft läßt sich steigern bis zur Bruchgrenze des für die Herstellung des erfindungsgemäßen Prallelementes verwendeten polymeren Materials. Wird die Krafteinwirkung vor Erreichen dieser Bruchgrenze abgebrochen, stellt sich das erfindungsgemäße Prallelement aufgrund der dem verwendeten polymeren Material innewohnenden Elastizität wieder in seine Ausgangslage zurück. Dabei nehmen die Begrenzungswände der äußeren und der inneren Hohlräume wieder ihre ursprüngliche Stellung ein, so daß der definierte Abstand zwischen diesen Begrenzungswänden wieder hergestellt wird.

Es hat sich als vorteilhaft herausgestellt, daß die Begrenzungswände der äußeren und der inneren Hohlräume der ersten Elementteile im Bereich der oberen Stirnflächenbegrenzung des Prallelementes beispielsweise in Form einer Knotenverbindung ineinander übergehen. Dadurch wird eine optimale Anbindung der Begrenzungswände der äußeren und der inneren Hohlräume bewirkt. Diese Knotenverbindungen der Begrenzungswände sind die Bereiche des erfindungsgemäßen Pralldämpfers, die bei der Einwirkung von Aufprallenergie als erste Bereiche der Energieabsorption wirken. Von den Knotenverbindungen setzt sich dann bei Aufrechterhaltung bzw. Steigerung der Aufprallenergie die Energieaufnahme in die Begrenzungswände fort und bewirkt hier durch das Zusammenschieben der Stirnflächenbegrenzungen eine Aufeinanderzubewegung der Begrenzungswände bis zu ihrer Anlage aneinander. In diesem Bereich der Verschiebung des erfindungsgemäßen Prallelementes durch Einwirkung von Aufprallenergie erfolgt der höchste Grad der Energieabsorption.

Nach dem Berühren der Begrenzungswände untereinander läßt sich die Energieaufnahme bis zur Bruchgrenze des verwendeten Polymermaterials fortsetzen, wobei der Grad der Energieaufnahme in diesem Fortsetzungsbereich nochmals ansteigt. In diesem Punkt kann es dann - je nach verwendetem Polymermaterial - bis zu einer Energieabsorption von 90 KN kommen.

Die geschilderten Knotenverbindungen der Begrenzungswände der äußeren Hohlräume der ersten Elementteile sind vorteilhaft über Verbindungsstellen an die zugeordneten Bereiche der Stirnflächenbegrenzungen angelenkt.

Zur zusätzlichen Kraftaufnahme hat es sich als zweckmäßig erwiesen, daß die Begrenzungswände der äußeren und der inneren Hohlräume der ersten Elementteile von Tragestegen, welche von der unteren Stirnflächenbegrenzung aufragen, gestützt sind.

In den durch die Begrenzungswände des zweiten Elementteils gebildeten Hohlraum, ausgehend von der oberen und der unteren Stirnflächenbegrenzung, ragen zur weiteren Energieabsorption Teilbereiche einer mit den Stirnflächen des zweiten Elementteils einstückig verbundenen Verschiebebegrenzung hinein. Dabei ist der von der oberen Stirnflächenbegrenzung abragende Teilbereich mit seinen Wandteilen ein trapezförmiges Hohlelement, welches an seiner der unteren Stirnflächenbegrenzung zugewandten Außenseite eine von abstehenden Wandteilen gebildete, nach außen offene Führungsnut aufweist.

Demgegenüber bildet der von der unteren Stirnflächenbegrenzung aufragende Teilbereich mit seinen Wandteilen ein trapezförmiges Hohlelement, welches im Ruhezustand in definiertem Abstand zur Außenseite des von der oberen Stirnflächenbegrenzung abragenden Teilbereichs steht und mit seinem oberen, schlankeren Bereich in die durch die Wandteile gebildete Führungsnut hineinragt.

Der von der oberen Stirnflächenbegrenzung abragende Teilbereich und der von der unteren Stirnflächenbegrenzung aufragende Teilbereich bilden neben zusätzlichen Elementen der Kraftaufnahme eine Verschiebebegrenzung, welche der Bruchbelastung des erfindungsgemäßen Pralldämpfers entgegenwirkt. Der Abstand zwischen den beiden Teilbereichen kann derart gewählt werden, daß die Bruchgrenze des zur Herstellung des erfindungsgemäßen Prallelementes verwendeten polymeren Werkstoffes noch nicht erreicht ist, wenn die abgerundete Spitze des trapezförmigen Hohlelementes den Grund der Führungsnut des von der oberen Stirnflächenbegrenzung abragenden Hohlelementes erreicht und dort zur Pressanlage kommt. In diesem Abschnitt der Verschiebung des erfindungsgemäßen Prallelementes haben sich die Begrenzungswände der äußeren und der inneren Hohlräume der ersten Elementteile bis zur Anlage aufeinanderzu bewegt. Die dadurch gebildete kompakte Gegenkraft gegen die Einwirkung der Aufprallenergie wird durch das Anlegen der Teilbereiche der durch das zweite Elementteil gebildeten Verschiebebegrenzung weiter verstärkt, so daß hier von einer zunehmend kompakter werdenden Gegenkraft gegen die Einwirkung der Aufprallenergie gesprochen werden kann. Vorteilhaft weisen die den Stirnflächenbegrenzungen des zweiten Elementteils zugewandten Wandbereiche nach außen ragende Abstützstege auf. Auch diese Abstützstege dienen der kompakten Gestaltung des erfindungsgemäßen Prallelementes und der Erhöhung der Gegenkraft gegen die Einwirkung der Aufprallenergie. Die Hohlräume der ersten und zweiten Elementteile einschließlich des durch die Verschiebebegrenzung im zweiten Elementteil gebildeten Hohlraumes verlaufen durchgehend in axialer Richtung des Prallelementes.

Eine weitere Erhöhung der durch das erfindungsgemäße Prallelement erzielbaren Gegenkraft gegen die Einwirkung der Aufprallenergie kann dadurch erzielt werden, daß einzelne oder alle Hohlräume der Elementteile mit einem elastischen Material ausgefüllt sind.

Dieses elastische Material kann beispielsweise ein Schaumstoff sein, der nach Erzeugung des erfindungsgemäßen Prallelementes in die Hohlräume eingebracht worden ist.

In der Zeichnung ist das erfindungsgemäße Prallelement schematisch dargestellt; es zeigt:

     Fig. 1 das Prallelement in unbelastetem Zustand

     Fig. 2 das Prallelement in belastetem Zustand.

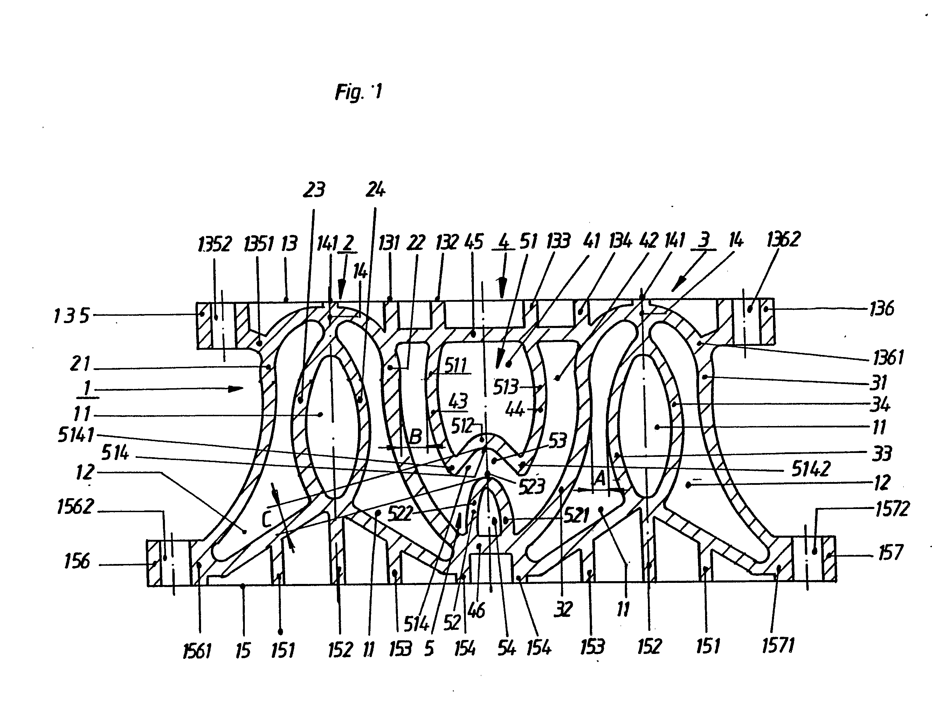

Fig. 1 zeigt das Prallelement 1 in unbelastetem Zustand. Das Prallelement 1 besteht aus der oberen Stirnflächenbegrenzung 13 und der unteren Stirnflächenbegrenzung 15, sowie den ersten Elementteilen 2, 3 und dem zwischen diesen angeordneten zweiten Elementteil 4 Die ersten Elementteile 2, 3 sind identisch in ihrer Figuration und begrenzen mit ihren Begrenzungswänden 21, 22, 31, 32 die äußeren Hohlräume 12. Die Begrenzungswände 21, 22, 31, 32 der äußeren Hohlräume 12 sind in der gezeigten Darstellung konkav gestaltet, während die Begrenzungswände 23, 24, 33, 34 der inneren Hohlräume 11 konvex ausgebildet sind.

Zwischen den ersten Elementteilen 2, 3 ist das Innere, als Doppelhohlraum 41, 42 ausgebildete zweite Elementteil 4 angeordnet. Die innenliegenden Begrenzungswände 22, 32 der äußeren Hohlräume 12 der ersten Elementteile 2, 3 bilden gleichzeitig die Begrenzungswände des äußeren Hohlraumes 42 des zweiten Elementteils 4.

Die Begrenzungswände 21, 22, 23, 24, 31, 32, 33, 34 der äußeren 12 und der inneren 11 Hohlräume der ersten Elementteile sind voneinander in definiertem Abstand A, B, angeordnet.

In der gezeigten Darstellung besitzen die äußeren Hohlräume 12 eine nahezu in der Mitte angeordnete Engstelle, die den Abstand A der Begrenzungswände 21, 22, 22, 24, 32, 33 und 31, 34 entspricht. Der Abstand zwischen den Begrenzungswänden 22, 43 und 32, 44 entspricht in ihrem

Verlauf über nahezu ihre gesamte parallele Länge dem Abstand B.

Die Elementteile 2, 3 treffen mit ihren Begrenzungswänden 21, 22, 31, 32 der äußeren Hohlräume 12 im Bereich der oberen Stirnflächenbegrenzung 13 des Prallelementes 1 in Form einer Knotenverbindung 14 aufeinander. Zu dieser Knotenverbindung stoßen die Begrenzungswände 23, 24, 33, 34 der inneren Hohlräume 11, so daß diese Knotenpunkte 14 einen einheitlichen Übergang für die Krafteinleitung in das Prallelement 1 bilden. Die Knotenverbindungen 14 verlaufen über die Verbindungsstellen 141 in die zugeordneten Bereiche der Stirnflächenbegrenzung 13.

Die Begrenzungswände 21, 22, 23, 24, 31, 32, 33, 34 der äußeren 12 und der inneren 11 Hohlräume der ersten Elementteile 2, 3 sind von Tragestegen 151, 152, 153 gestützt, die von der unteren Stirnflächenbegrenzung 15 aufragen. Anstelle der Knotenverbindungen 14 können auch im oberen Bereich ähnliche Tragestege 151, 152, 153 verwendet werden, wie sie im unteren Bereich gezeigt sind.

Das zweite Elementteil 4 besitzt einen Hohlraum 42, welcher durch die Begrenzungswände 22, 32, 43, 44 eingeschlossen wird. Das zweite Elementteil 4 bildet die Verschiebebegrenzung 5, deren Teilbereiche 51, 52 mit den Wandbereichen 45, 46 des zweiten Elementteils 4 einstückig verbunden sind. Der von dem oberen Wandbereich 45 abragende Teilbereich 51 besitzt die Wandteile 511, 512, 513 und bildet ein trapezförmiges Hohlelement.

Dieses weist an seiner der unteren Stirnflächenbegrenzung 15 zugewandten Außenseite 514 eine von abstehenden Wandteilen 5141, 5142 gebildete, nach außen offene Führungsnut 53 auf. Demgegenüber bildet der von der unteren Stirnflächenbegrenzung 15 aufragende Teilbreich 52 mit seinen Wandteilen 521, 522 ein trapezförmiges Hohlelement 54. Das Hohlelement 54 steht im Ruhezustand des Prallelementes 1 in definiertem Abstand C zur Außenseite 514 des von der oberen Stirnflächenbegrenzung 13 abragenden Teilbereichs 51. Es ragt mit seinem oberen, schlanken Bereich 523 im Ruhezustand leicht in die durch die Wandteile 5141, 5142 gebildete Führungsnut 53 hinein. Dadurch wird bei Beginn der Krafteinwirkung auf den Pralldämpfer 1 verhindert, daß beispielsweise bei schrägem Auftreffen der Kraft der Teilbereich 51 mit dem Teilbereich 52 der Verschiebebegrenzung 5 außer Wirkverbindung treten kann.

Die Stirnflächenbegrenzungen 13, 15 des zweiten Elementteils 4 weisen von den Wandbereichen 45, 46 nach außen abragende Abstützstege 131, 132, 133, 134, 154 auf. Die Abstützstege 131, 132, 133, 134 liegen in gleicher Ebene mit den Verbindungsstellen 141 der Knotenverbindungen 14 mit der Stirnflächenbegrenzung 13. Ebenfalls in dieser Ebene liegen die einstückig an die oberen Bereiche der Begrenzungswände 21, 31 angelenkten Befestigungsösen 135, 136. Die Befestigungsösen 135, 136 sind über den Verbindungssteg 1351, 1361 an die Begrenzungswände 21, 31 angelenkt und weisen beispielsweise Durchgangsöffnungen 1352, 1362 für Schraubverbindungen auf. Gleichermaßen liegen in einer Ebene mit der unteren Stirnflächenbegrenzung 15 die freien Enden Tragestege 151, 152, 153, 154. Auch hier sind in diese Ebene an die unteren Bereiche der Begrenzungswände 21, 31 die Befestigungsösen 156, 157 angelenkt, welche über die Stegbereiche 1561, 1571 mit den Begrenzungswandungen 21, 31 einstückig verbunden sind und ebenfalls Durchgangsöffnungen 1562, 1572 für eine Schraubenbefestigung aufweisen.

In die durchgehenden Hohlräume 11, 12, 41, 42, 54 des Prallelementes können einzeln oder gemeinsam in der Zeichnung nicht dargestellte elastische Füllmaterialien eingebracht sein.

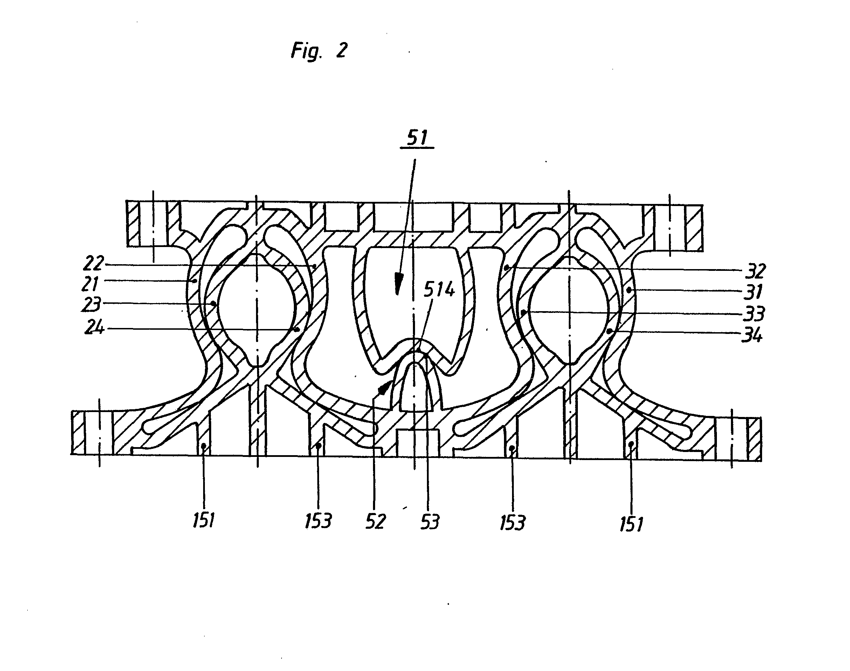

Die in Fig. 2 gezeigte Stellung des Prallelementes 1 in belastetem Zustand zeigt deutlich die Auslenkungen der Begrenzungswände 21, 22, 31, 32. Diese Begrenzungswände 21, 22, 31, 32 sind durch die Krafteinwirkung aus ihrem konkaven Zustand nahezu in einen konvexen Zustand übergegangen. Der konvexe Zustand der Begrenzungswände 23, 24, 33, 34, der bereits im unbelasteten Zustand gegeben ist (Fig. 1), hat sich bei dieser Belastungslage so weit verstärkt, daß sich über einen größeren Bereich eine Anlage der Außenwand der Begrenzungswände 23, 24, 33, 34 an der Innenwand der Begrenzungswände 21, 22, 31, 32 ergibt.

Im unteren Bereich liegt bei der dargestellten Krafteinwirkung die Begrenzungswand 21 unter teilweiser Aufhebung des Hohlraums 12 über dem Tragesteg 151 an der Innenwand an und erzeugt damit eine weitere Stellung erhöhter Kraftaufnahme. Das gleiche gilt für die Begrenzungswand 22 über dem Bereich des Tragsteges 153.

Die Verschiebebegrenzung 5 tritt bei dieser Höhe der Krafteinwirkung in volle Wirksamkeit, indem die Teilbereiche 51, 52 einerseits mit der Außenseite 514 und andererseits mit dem Bereich 523 fest aufeinander liegen.

Auf diese Weise wird durch das Anliegen der Wandbereiche 21, 23, 22, 24, 31, 34 und 32, 33 sowie 21, 22 im Bereich der Tragstege 151, 153 und 31, 32 ebenfalls im Bereich der Tragstege 151, 153 und durch das Aufliegen der Teilbereiche 51, 52 der Verschiebebegrenzung 5 im Bereich der Außenflächen 514, 523 ein an neun Stellen abgestützter und entsprechend verstärkter Rahmen für das Prallelement geschaffen.

Dadurch läßt sich die über das Prallelement 1 aufnehmbare Kraft gegenüber derartigen Kraftaufnahmen von Prallelementen nach dem Stand der Technik in der geschilderten Weise erhöhen.

Die Elementteile 2, 3, 4 können nach Belieben vermehrt oder verringert werden. In speziellen Fällen kann auch bereits eines der Elementteile 2, 3 ohne ein Elementteil 4 zur Lösung eines gegebenen Dämpfungsproblems z.B. bei stoßempfindlichen Geräten ausreichend sein.

## Ansprüche

1. Stoßfänger für Kraftfahrzeuge mit die Aufprallenergie absorbierenden, zwischen dem Stoßfänger und tragenden Teilen des Kraftfahrzeuges angeordneten Prallelementen aus polymeren Werkstoffen, wobei die Prallelemente neben den Stirnflächenbegrenzungen seitliche, einen Hohlraum einschließende Verbindungswände aufweisen und wobei von den Stirnflächenbegrenzungen in den Hohlraum der einzelnen Prallelemente zueinandergerichtete Verschiebebegrenzungen aufragen, dadurch gekennzeichnet, daß das Prallelement (1) aus wenigstens zwei, einen inneren (11) und einen äußeren (12) Hohlraum begrenzenden ersten Elementteilen (2, 3) besteht, welche zwischen sich einen inneren, als Doppelhohlraum (41, 42) ausgebildeten zweiten Elementteil (4) einschließen, daß die Begrenzungswände (21, 22, 31, 32) der äußeren Hohlräume (12) der ersten Elementteile (2, 3) in bekannter Weise konkav und die Begrenzungswände (23, 24, 33, 34) der inneren Hohlräume (11) der ersten Elementteile (2, 3) konvex ausgebildet sind, und daß die innenliegenden Begrenzungswände (22, 32) der äußeren Hohlräume (12) der ersten Elementteile (2, 3) gleichzeitig die Begrenzungswände des äußeren Hohlraums (42) des zweiten Elementteils (4) bilden.

2. Stoßfänger nach Anspruch 1, dadurch gekennzeichnet, daß die Begrenzungswände (21, 22, 31, 32) der äußeren Hohlräume 12 und die Begrenzungswände (23, 24, 33, 34) der inneren Hohlräume 11 der ersten Elementteile (2, 3) in definiertem Abstand (A, B) voneinander angeordnet sind.

3. Stoßfänger nach Ansprüchen 1 und 2, dadurch gekennzeichnet, daß die Begrenzungswände (21, 22, 23, 24, 31, 32, 33, 34) der äußeren (12) und der inneren (11) Hohlräume der ersten Elementteile (2, 3) im Bereich der oberen Stirnflächenbegrenzung (13) des Prallelementes (1) in Form einer Knotenverbindung (14) ineinander übergehen.

4. Stoßfänger nach Anspruch 3, dadurch gekennzeichnet, daß die Knotenverbindungen (14) über Verbindungsstellen (141) an die zugeordneten Bereiche der Stirnflächenbegrenzung (13) angelenkt sind.

5. Stoßfänger nach Ansprüchen 1 und 4, dadurch gekennzeichnet, daß die Begrenzungswände (21, 22, 23, 24, 31, 32, 33, 34) der äußeren (12) und der inneren (11) Hohlräume der ersten Elementteile (2, 3) von Tragestegen (151, 152, 153), welche von der unteren Stirnflächenbegrenzung (15) aufragen, gestützt sind.

6. Stoßfänger nach Anspruch 1, dadurch gekennzeichnet, daß in den durch die Begrenzungswände (22, 32, 43, 44) des zweiten Elementteils (4) gebildeten Hohlraum (42), ausgehend von der oberen (13) und der unteren (15) Stirnflächenbegrenzung die Teilbereiche (51, 52) einer mit den Wandbereichen (45, 46) des zweiten Elementteils (4) einstückig verbundenen Verschiebebegrenzung (5) hineinragen.

7. Stoßfänger nach Anspruch 6, dadurch gekennzeichnet, daß der von dem oberen Wandbereich (45) abragende Teilbereich (51) mit seinen Wandteilen (511, 512, 513) ein trapezförmiges Hohlelement bildet, welches an seiner der unteren Stirnflächenbegrenzung (15) zugewandten Außenseite (514) eine von abstehenden Wandteilen (5141, 5142) gebildete, nach außen offene Führungsnut (53) aufweist.

8. Stoßfänger nach Ansprüchen 6 und 7, dadurch gekennzeichnet, daß der von der unteren Stirnflächenbegrenzung (15) aufragende Teilbereich (52) mit seinen Wandteilen (521, 522) ein trapezförmiges Hohlelement (54) bildet, welches im Ruhezustand in definiertem Abstand (C) zur Außenseite (514) des von der oberen Stirnflächenbegrenzung (13) abragenden Teilbereichs (51) steht und mit seinem oberen, schlankeren Bereich (523) in die durch die Wandteile (5141, 5142) gebildete Führungsnut (53) hineinragt.

9. Stoßfänger nach Ansprüchen 1 und 6, dadurch gekennzeichnet, daß die den Stirnflächenbegrenzungen (13, 15) des zweiten Elementteiles (4) zugewandten Wandbereiche (45, 46) nach außen ragende Abstützstege (131, 132, 133, 134, 154) aufweisen.

11. Stoßfänger nach einem oder mehreren der vorangegangenen Ansprüche, dadurch gekennzeichnet, daß die Hohlräume (11, 12, 41, 42, 54) der Elementteile (2, 3, 4) mit einem elastischen Material ausgefüllt sind.

Geänderte Patentansprüche

Stoßfänger für Kraftfahrzeuge mit die Aufprallenergie absorbierenden, zwischen dem Stoßfänger und tragenden Teilen des Kraftfahrzeuges angeordneten Prallelementen aus polymeren Werkstoffen, wobei die Prallelemente neben den Stirnflächenbegrenzungen seitliche, einen Hohlraum einschließende, tonnenförmig ausgebauchte Verbindungswände aufweisen, und wobei von den Stirnflächenbegrenzungen in dem Hohlraum der einzelnen Prallelemente und/oder in den Zwischenraum zwischen den einzelnen Prallelementen zueinander gerichtete, jeweils einen Hohlraum umschließende Verschiebebegrenzungen aufragen, deren Stirnflächen zueinander gerichtet sind und in unbelastetem Zustand im Verschiebeabstand voneinander stehen, dadurch gekennzeichnet, daß das Prallelement (1) aus wenigstens zwei, einen inneren (11) und einen äußeren (12) Hohlraum begrenzenden ersten Elementteilen (2, 3) besteht, welche zwischen sich einen inneren, als Doppelhohlraum (41, 42) ausgebildeten zweiten Elementteil (4) einschließen, daß die Begrenzungswände (21, 22, 31, 32) der äußeren Hohlräume (12) der ersten Elementteile (2, 3) in bekannter Weise konkav und die Begrenzungswände (23, 24, 33, 34) der inneren Hohlräume (11) der ersten Elementteile (2, 3) demgegenüber konvex ausgebildet sind, und daß die innenliegenden Begrenzungswände (22, 32) der äußeren Hohlräume (12) der ersten Elementteile (2, 3) gleichzeitig die Begrenzungswände des äußeren Hohlraumes (42) des zweiten Elementteils (4) bilden.

Fig. 1

EP 0 365 765 A1

Fig. 2

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-U-8 614 694 (REHAU AG & CO.) <br> * Seite 3, Zeilen 13-18; Seite 5, Zeile 19 - Seite 6, Zeile 10; Seite 6, Zeile 23 - Seite 7, Zeile 28; Abbildungen 1,2; Ansprüche 1,3 * <br> --- | 1,2,6 | B 60 R 19/26 |
| A | US-A-4 573 724 (LAWRENCE E. CAMPEN) <br> * Anspruch 3 * <br> --- | 1,2 | |
| A | FR-A-1 217 304 (BRUNO BOTHAS) <br> * Seite 1, Spalte 1, Zeilen 15-19; Seite 1, Spalte 2, Zeile 43 - Seite 2, Spalte 1, Zeile 5; Abbildung 3 * <br> ----- | 1 | |
| | | | **RECHERCHIERTE SACHGEBIETE (Int. Cl.5)** <br><br> B 60 R <br> F 16 F |

Der vorliegende Recherchenbericht wurde für alle Patentansprüche erstellt

| Recherchenort | Abschlußdatum der Recherche | Prüfer |
|---|---|---|
| DEN HAAG | 30-11-1989 | AREAL CALAMA A. |